# EUROPÄISCHE PATENTSCHRIFT

(11) **EP 1 844 101 B1**
(45) Veröffentlichungstag und Bekanntmachung des Hinweises auf die Patenterteilung: **25.02.2015**
(21) Anmeldenummer: 05770100.5
(22) Anmeldetag: 21.06.2005
(51) Int. Cl.: C08L 27/06, C08L 67/02, C08J 5/18

(54) **VERFAHREN ZUR HERSTELLUNG EINER FOLIE ODER EINER FOLIENBAHN AUS EINER MISCHUNG AUS VINYLCHLORIDPOLYMERISAT ODER POLYVINYLCHLORID UND FOLIE DAFÜR**
PROCESS TO PREPARE A FILM OR FILM SHEET FROM A BLEND OF VINYL CHLORIDE POLYMER OR POLYVINYLCHLORIDE, AND FILM THEREOF
PROCÉDÉ DE PRÉPARATION D'UN FILM OU D'UNE BANDE DE FILM A PARTIR D'UN MELANGE DE POLYMERISAT DE CHLORURE DE VINYLE OU DE CHLORURE DE POLYVINYLE, ET FILM OBTENU

(30) Priorität: 27.01.2005 DE 102005003776
(43) Veröffentlichungstag der Anmeldung: 17.10.2007
(73) Patentinhaber: Klöckner Pentaplast GmbH, 56412 Heiligenroth (DE)
(72) Erfinder: GRIGO, Thorsten, 84576 Teising (DE); SCHRAUF, Roland, 84524 Neuötting (DE); KÜRMAYER, Werner, 84543 Winhöring (DE)
(74) Vertreter: Zounek, Nikolai
(86) Internationale Anmeldenummer: PCT/EP2005/006666
(87) Internationale Veröffentlichungsnummer: WO 2006/079363

(56) Entgegenhaltungen:
- WO-A-99/47605
- US-A- 4 010 221
- US-A- 4 401 720
- US-A- 5 001 192
- DATABASE CA [Online] CHEMICAL ABSTRACTS SERVICE, COLUMBUS, OHIO, US; XP002354088 gefunden im STN Database accession no. 137:6947 -& JP 2002 167487 A (MITSUBISHI PLASTICS INDUSTRIES, LTD., JAPAN) 11. Juni 2002 (2002-06-11)
- ANONYMOUS: "Poly(vinyl chloride)/plasticizer/copolyester blends" RESEARCH DISCLOSURE, Bd. 280, Nr. 021, August 1987 (1987-08), XP002354035 Hampshire, UK

## Beschreibung

Die Erfindung betrifft ein Verfahren zur Herstellung einer Folie oder einer Folienbahn aus einen Mischung aus Vinylchloridpolymerisat oder Polyvinylchlorid mit 5 bis 94 Gew.-% und einem K-Wert von 50 bis 90, Additiven mit 2 bis 25 Gew.-% und einem Polymer, wobei die Gewichtsprozente auf das Gesamtgewicht der Formmasse bezogen sind sowie eine Folie, hergestellt aus der Formmasse.

Aus der Mischung wird durch Plastifizieren und anschließendes Extrudieren durch eine Düse oder durch Kalandrieren eine Folie oder Folienbahn hergestellt, die inline und/oder offline z. B. durch Verstrecken weiterverarbeitet werden.

Plastifizierte und starre Polyvinylchlorid-Zusammensetzungen werden bekannter Weise durch. Zugabe verschiedener Additive modifiziert, um das gewünschte Eigenschaftsprofil zu erhalten. Bekannte PVC-Zusammensetzungen können warm verformt werden und sind für eine Vielzahl von Anwendungen, beispielsweise als Verpackungs-, Schrumpf- und Hartfolien geeignet. Für die Modifizierung von PVC-Folie werden Modifizierungsmittel zur Verbesserung der Schlagzähigkeit, zur Verbesserung der Wärmebeständigkeit, Arbeitshilfsmittel zur Verbesserung der Verarbeitbarkeit und des Ausstoßes der Produktionsanlage, Gleitmittel zur Verbesserung des Gelierverhaltens während der Fertigung, Fließhilfsmittel zur Verbesserung der Thermoformbarkeit und Verstreckbarkeit, Mattierungsmittel zur Reduzierung des Glanzes und dergleichen zugesetzt. Die Gewichtsanteile der einzelnen Additive liegen je nach Anforderung zwischen 0,1 und über 40 Gew.-%. Zur Verbesserung der Fließfähigkeit und Verstreckbarkeit von Polyvinylchlorid-Zusammensetzungen werden bevorzugt Vinylchlorid-Copolymere eingesetzt.

Aus der EP- 0 172 479 B1 ist eine Folie mit matter und rauher Oberfläche auf der Basis von Vinylchloridpolymerisatenund Füllstoffen bekannt. Des Weiteren sind dieser Folie Gleitmittel und Wärmestabilisatoren zugesetzt. Als Füllstoff wird Stärke mit 1 bis 15 Gew.-%, bezogen auf die Gewichtssumme des Folienmaterials, verwendet. Durch diesen Füllstoff wird bei Polyvinylchloridfolien auf der Basis von Vinylchloridpolymerisaten mit relativ weit unterschiedlichem Molekulargewichten eine gute Mattigkeit und Rauhigkeit und gleichzeitig eine möglichst geringe innere Trübung erzielt. Als Vinylchloridpolymerisate können dabei Vinylchlorid-Homo- oder Vinylchlorid-Copolymerisate eingesetzt werden, die nach einem der üblichen Polymerisationsverfahren, nämlich nach der Emulsionspolymerisation, Suspensionspolymerisation oder Massepolymerisation hergestellt worden sind. Der Anteil der Comonomeren in den Copolymerisaten beträgt im Allgemeinen höchstens 20 Gew.-%, bezogen auf das Copolymerisat.

Aus der DE-Auslegeschrift 27 16 853 ist eine Folie mit matter und rauher Oberfläche bekannt, die aus einem Vinylchlorid-Polymerisat, einem Stabilisator und einem Gleitmittel besteht und durch Rollknet-Kalandrierung hergestellt worden ist. Das Vinylchlorid-Polymerisat besitzt in einer Menge von 10 bis 40 Gew.-% ein mittleres Molekulargewicht von 110.000 bis 190.000 und in einer Menge von 60 bis 90 Gew.-%, jeweils bezogen auf die Summe an Vinylchlorid-Polymerisat, ein mittleres Molekulargewicht von 45.000 bis 75.000. Der Stabilisator ist aus der Gruppe der Zinnstabilisatoren und das Gleitmittel aus der Gruppe Montansäureester, Stearinsäure, Bis-Stearcylethylendiamin, Bis-Palmitoylethylendiamin und Ölsäureglycerinester ausgewählt, wobei die Menge an Stabilisator 0,5 bis 2 Gew.-% und die Menge an Gleitmittel 0,1 bis 2 Gew.%, jeweils bezogen auf Vinylchlorid-Polymerisat, beträgt. Das Modifizierungsmittel für die Schlagzähigkeit ist aus der Gruppe der Acrylnitril- Butadien-Styrol-, Methylmethacrylat-Butadien-, Styrol- und Methylmethacrlyat-Acrylnitril-Butadien-Styrol-Polymerisate, in einer Menge von 3 bis 15 Gew.-%, bezogen auf Vinylchlorid-Polymerisat, ausgewählt.

Die EP 1 066 339 B1 beschreibt ein Verfahren zur Herstellung einer Folie oder eines Blattes aus einer Polyesterharzzusammensetzung durch Kalandrieren. Die Polyesterkomponente des Harzes ist ein amorpher oder halbkristalliner Polyester, welcher eine Kristallisationshalbwertzeit aus einem geschmolzenen Zustand von mindestens 5 min aufweist. Die Polyesterkomponente besteht aus mindestens 80 Mol-% einer Disäurerestkomponente, aus 80 bis 100 Mol-% einer Diolrestkomponente und 0 bis 20 Mol-% eines modifzierenden Diols. Die Disäurerestkomponente basiert auf 100 Mol-% Disäurerest und der Diolrest basiert auf 100 Mol-% Diolrest. Die Harzzusammensetzung schließt ein Additiv ein, welches ein internes Gleitmittel oder Antirutschmittel oder eine Mischung davon ist. Die Menge des zugesetzten Additivs liegt zwischen 0,01 bis 10 Gew.-% auf Basis des Gesamtgewichtes der Harzzusammensetzung.

Derartige amorphe oder halbkristalline Polyesterharzzusammensetzungen sind zum Kalandrieren mit Hilfe von herkömmlichen Kalandrierverfahren zur Herstellung gleichförmiger Folien oder Blätter überraschender Weise geeignet. Solche Polyesterharzzusammensetzungen werden unter dem Markennamen Tsunami^{®} der Firma Eastman Chemical Corp., Tennessee, USA, vertrieben. Die Polyesterzusammensetzungen werden üblicher Weise für die Herstellung von Polyesterfolien als Basispolymere in der Regel mit über 96 Gew.-%, bezogen auf das Gesamtgewicht der Polyesterfolien, eingesetzt.

Die Druckschrift JP 2002167487 A hat die Aufgabe, ein polymeres Recyclingmaterial auf Basis von PVC bereitzustellen, wobei das PVC ein- oder mehrfach verarbeitet wurde. Um die elektrischen Isoliereigenschaften und die Temperaturbeständigkeit des Recyclingmaterials zu verbessern, sieht die vor, den aufzuarbeitenden PVC-Abfall mit Polyester, welcher ebenfalls ein- oder mehrfach verarbeitet, insbesondere vergossen worden ist, zu mischen. Der Polyester zudem 1 bis 40 Gew.-% Polybutylenterephthalat enthalten.

Die Druckschrift US 4 401 720 betrifft PVC-Plastisol-Zusammensetzungen, die als Adhäsive zum Laminieren von Strukturen eingesetzt werden. Die Plastisol-Zusammensetzungen sind zu Folien gießbar, jedoch finden sich keine Hinweise, dass sie zu Folien extrudierbar oder kalandrierbar sein können. In der Druckschrift wird ein Blend aus Polyvinylchlorid und einem Polyester beschrieben, dem ein Weichmacher zugegeben ist.

Bei den herkömmlichen PVC-Folien werden als Modifizierungsmittel übliche Polymerisate aus Acrylnitril-Butadien-Styrol, Methylmethacrylat-Butadien-Styrol, Methylmethacrylat-Acrylnitril-Butadien-Styrol, Methylmethacrylat und chloriertes Polyethylen, Polymethylmethacrylat und Ethylen-Vinylacetatals Schlagzähkomponenten in einer Menge von 1 bis 20 Gew.-%, bezogen auf das Gewicht der PVC-Folie, eingesetzt. Übliche Gleitmittel von PVC-Formmassen, aus denen die PVC-Folien hergestellt werden, sind Fettsäuren, Fettalkohole, Fettsäureamide, Metallseifen, Ester von Fettsäuren mit ein- oder mehrwertigen Alkoholen, Ester von Dicarbonsäuren mit ein- oder mehrwertigen Alkoholen, Ester von Fettsäuren und Dicarbonsäuren mit mehrwertigen Alkoholen, sogenannte Mischester oder Komplexester, Ester von Phthalsäure mit ein- oder mehrwertigen Alkoholen oder natürliche oder synthetische Wachse. Die Menge an Gleitmitteln beträgt 0,1 bis 2 Gew.-%, bezogen auf das Gesamtgewicht der Formmasse. Bekannte Wärmestabilisatoren sind Zinnstabilisatoren, insbesondere Zinncarboxylate, Zinnmercaptide und Zinndioglykolate. Des Weiteren sind Metall-Stabilisatoren auf Basis Calcium, Zink, Barium, Cadmium und sonstige metallfreie organische Stabilsatoren und anorganische Stabilsatoren wie beispielsweise Chlorfänger auf Basis Dihydrotalcit einsetzbar. Der Anteil an Wärmestabilisatoren beträgt in der Regeln 0,3 bis 5 Gew.-%, bezogen auf das Gesamtgewicht der Formmasse.

Aufgabe der Erfindung ist es ein Verfahren zur Herstellung von Folien sowie Folien auf der Basis von Polyvinylchlorid oder Vinylchloridpolymerisat bereitzustellen, bei denen im Vergleich mit PVC-Folien, die Standard-Modifikatoren als Schlagzähkomponenten enthalten, zumindest einige der nachfolgenden Eigenschaften wie Thermoformbarkeit, Verstreckbarkeit, Zähigkeit, Pasteurisierbarkeit und optische Defekte wie Stippen, verbessert und somit Lichtdurchlässigkeit, Farbneutralität, Licht- und Thermostabilität der Folien erhöht sind.

Diese Aufgabe wird erfindungsgemäß gelöst von einer Verfahren zur Herstellung einer Folie oder einer Folienbahn aus einer Mischung aus Vinylchloridpolymerisat oder Polyvinylchlorid, Polyester und Additiven umfassend die Schritte
(a) Auswählen eines pulver-, pellet- oder granulatförmigen Vinylchloridpolymerisats oder Polyvinylchlorids mit einem K-Wert von 50 bis 90 und einem Anteil von ≥ 5 Gew.-% an der Mischung und Mischen mit Additiven aus der Gruppe Modifizierungsmittel bestehend aus hochmolekularen Polymeren, Stabilisatoren, Wachsen, Antiblockmitteln, Farbmitteln, Weichmachern, Verarbeitungshilfsmitteln, mit einem Anteil von 2 bis 25 Gew.% an der Mischung;
(b) Auswählen eines amorphen oder halbkristallinen Polyesters in Pulver-, Pellet- oder Granulatform mit einer Kristallisationshalbwertzeit im geschmolzenen Zustand von mindestens 5 min, mit einem Anteil von 5 bis 90 Gew.-% an der Mischung;
(c) Plastifizieren und Aufschmelzen der Mischung gemäß den Schritten (a) und (b);
(d) Kalandrieren der aufgeschmolzenen Mischung durch Einführen in den Druckspalt zweier Kalandrierwalzen eines Walzenkalanders, bei Temperaturen von 150 bis 250 °C, um eine Folie oder eine Folienbahn zu formen; und
(e) Verstrecken der Folie oder Folienbahn in einem inline und/oder offline Prozess mit einem Streckgrad von 3 bis 7 in Langs- und/oder Querrichtung.

In Weiterbildung der Erfindung macht das Polyvinylchlorid 60 bis 80 Gew.-% der Mischung aus und seine K-Wert beträgt 50 bis 65 und haben die Additive 2 bis 16 Gew.-% und der Polyester von ≥ 10 Gew.-% Anteil an der Mischung.

In weiterer Ausgestaltung der Mischung weist das Polyvinylchlorid einen K-Wert von 60 und einen Anteil von 60 bis 62 Gew.-% an der Mischung auf und beträgt der Anteil des Polyesters 20 bis 30 Gew.-% der Mischung. Bevorzugt betragen die Anteile des Polyvinylchlorids 70 bis 72 Gew.-% und der Anteil des Polyesters 15 Gew.-% der Mischung. Insbesondere hat das Polyvinylchlorid einen K-Wert von 60, einen Anteil von 60 bis 62 Gew.-% und der Polyester einen Anteil bis 27 Gew.%, insbesondere von 25 Gew.-% der Mischung.

Die Additive der Mischung sind vorteilhafter Weise aus der Gruppe Modifizierungsmittel, bevorzugt hochmolekulare Polymere, Stabilisatoren, Wachse, Antiblockmittel, Farbmittel, Weichmacher, Verarbeitungshilfsmittel ausgewählt. Das Vinylchloridpolymerisat umfasst in einer erfindungsgemäßen Ausführungsform zwei Komponenten, so dass die Formmasse Vinylchloridpolymerisat mit einem K-Wert von 50 bis 65, einem Anteil von 55 bis 70 Gew.-% der Mischung und Vinylchloridpolymerisat mit einem K-Wert von 70 bis 90 und einem Anteil von 15 bis 25 Gew.-% der Mischung enthält. Bevorzugt besteht das Vinychloridpolymerisat aus Vinylchlorid-Copolymer, das als Comonomer Ethylen, Propylen oder Vinylacetat mit einem Anteil von 1 bis 45 Gew.-% des Vinylchlorid-Copolymeren enthält. Der im Blend der Mischung enthaltene Polyester ist in Pulver-, Pellet- oder Granulatform der Mischung zugemischt.

Aus der Mischung werden Folien, Folienbahnen hergestellt.

Erfindungsgemäße Folien bzw. Folienbahnen werden in der Weise erhalten, dass die Formmasse zu einer unverstreckten Folie bzw. Folienbahn mit einer Dicke von 100 µm bis 1 mm extrudiert bzw. kalandriert wird. Diese Folie bzw. Folienbahn werden in einem nachfolgenden Verfahrensschritt (inline und/oder offline) auch noch verstreckt. Der Streckgrad kann Werte von 3 bis 7, insbesondere von 3 bis 4 betragen. Es werden durch das Verstrecken dünnere Folien mit einer hohen Maßänderung in Streckrichtung (Schrumpffolien) erhalten. Der Streckgrad ist durch den Quotienten aus Foliendicke vor dem Verstrecken und Foliendicke nach dem Streckvorgang gegeben. Die verstreckte Folie weist eine Dicke von 20 µm bis 800 µm, insbesondere von 35 bis 200 µm auf. Die Trübung der Folie beträgt 2 bis 5 % bei einer Foliendicke von 50 µm und 9 bis 16 % bei einer Foliendicke von 200 µm.

Insbesondere beträgt die Schlagzugzähigkeit der verstreckten Folie längs/quer bei einer Foliendicke von 50 µm 150 bis 230 / 580 bis 980 kJ / m². Die Schlagzugzähigkeit einer unverstreckten Folie mit einer Foliendicke von 200 µm beträgt längs/quer 230 bis 330 kJ/m² / 330 bis 420 kJ /m².

Der E-Modul der erfindungsgemäßen Folie beträgt längs/quer 1400 bis 3500 N/mm² / 1400 bis 3500 N/mm². bei einer Foliendicke im Bereich von 35 bis 200 µm.

Das Verfahren zur Herstellung einer Folie oder einer Folienbahn aus einer Mischung umfasst die Schritte des Anspruchs 1.

Die weitere Ausgestaltung des Verfahrens ergibt sich aus den Merkmalen der Ansprüche 2 bis 6.

Die Folien nach der Erfindung finden u. a. Verwendung als Verpackungs-, Schrumpf-, Möbel-, Deckenkassetten-, Kartenfolien sowie als beschreib- und bedruckbare Folien. Da die Folien thermoformbar und/oder verstreckbar sind, finden sie vor allem als Verpackungs- und Schrumpffolien Anwendung.

Die Erfindung wird im Folgenden an Hand von Folienbeispielen näher erläutert.

Die in den nachstehenden Tabellen 1 und 2 angeführten Folienbeispiele umfassen die Vergleichsbeispiele 1 bis 3, 7 und die erfindungsgemäßen Beispiele 4 bis 6. In der Rezeptur der jeweiligen Folien sind die chemischen Bezeichnungen der einzelnen Komponenten der Folien, ihre Marken- bzw. Typenbezeichnungen und der jeweilige Lieferant angegeben.

Die Vergleichsbeispiele 1 bis 3 betreffen PVC-Folien mit vom Vergleichsbeispiel 1 zu Vergleichsbeispiel 3 abnehmenden Anteilen an PVC und zunehmenden Anteilen an Vinylchlorid/-Vinylacetat-Copolymeren in den Folien. Das Vergleichsbeispiel 7 ist eine PET-Folie mit einem Anteil von 97,5 Gew.-% Polyester in der Folie. Bei diesem Polyester handelt es sich um einen Polyester, wie er in der EP-0 1 066 339 B1 der Firma Eastman Chemical Co., Tennessee, USA offenbart und patentrechtlich geschützt ist.

Die Messung der Kristallisations-Halbwertszeit des Polyesters ist in dem europäischen Patent im Anspruch 1 im Einzelnen beschrieben, worauf hier Bezug genommen wird.

In den erfindungsgemäßen Folien der Beispiele 4 bis 6 nimmt der Anteil von PVC in den jeweiligen PVC/PET-Blends vom Beispiel 4 nach Beispiel 6 ab und Anteile des Polyesters gemäß dem zuvor erwähnten europäischen Patent zu, wobei der Polyester an Stelle des Vinylchlorid/Vinylacetat-Copolymeren als Modifikator eingesetzt wurde. Die übrigen Additive der Folien hatten in den Vergleichsbeispielen 1 bis 3 und in den erfindungsgemäßen Beispielen 4 bis 6 jeweils die gleichen Gewichtsanteile an den Folien.

Unter Vinylchloridpolymerisat sind Vinylchlorid-Homo- und/oder Vinylchlorid-Copolymerisate zu verstehen. Dabei ist Polyvinylchlorid das durch Homopolymerisation von Vinylchlorid anfallende Polymer und zählt somit zu den Vinylchlorid-Homopolymerisaten. Der K-Wert der Vinylchloridpolymerisate entspricht einer Kennzahl, die mit dem mittleren Polymerisationsgrad bzw. dem mittleren Molekulargewicht korreliert ist und wird bekanntlich durch Einhaltung einer entsprechenden Temperatur während der Polymerisation und/oder durch die Zugabe von Reglern eingestellt. Der K-Wert eines Vinylchloridpolymerisates wird nach DIN 53 726 bestimmt, wobei das Vinylchloridpolymerisat in Cyclohexanon gelöst wird.

Die Formmasse enthält in einer Ausführungsform Polyvinylchlorid mit einem K-Wert von 60 und mit 50 bis 75 Gew.-%, bezogen auf das Gesamtgewicht der Formmasse. Als Modifikator bezüglich der Schlagzugzähigkeit wird ein Methylmethacrlyat-Butadien-Styrol-Copolymerisat von beispielsweise 10 Gew.-%, bezogen auf die Formmasse, eingesetzt. Die erfindungsgemäße Formmasse enthält eine geringe Menge an Verarbeitungshilfe, beispielsweise ein Methylmethacrylat-Acrylatester-Styrol-Copolymerisat von 1 bis 2 Gew.-%, bezogen auf die Formmasse, insbesondere von 1 Gew.-%. Des Weiteren ist als Wärmestabilisator ein Organo-Zinn-Schwefel-Stabilisator wie Dioctylzinn-bis-(Thiooglykolsäure-2-Ethyl-1-Hexylester mit mehr als 70 % und Monooctylzinntris-(Thioglykolsäure-2-Ethyl-1-Hexylester mit weniger als 30 Gew.-%, jeweils bezogen auf die Menge des Stabilisators, vorgesehen. Der Anteil des Stabilisators an der Formmasse beträgt 1 bis 2 Gew.-%, insbesondere 1,5 Gew.%.

Als Gleitmittel werden vorzugsweise Mischungen von Komplex- und Glycerinestern sowie gesättigte, unverzweigte aliphatische Monocarbonsäuren wie Palmitin- und Stearinsäure eingesetzt. Die wirksame Menge an Gleitmittel beträgt üblicher Weise 0,1 bis 2,5 Gew.-%, insbesondere 0,3 Gew.-%, bezogen auf das Gesamtgewicht der Formmasse. Der zweite wesentliche Bestandteil des Blends aus Vinylchloridpolymerisat bzw. Polyvinylchlorid und einem Polymer ist ein halbkristalliner oder amorpher Polyester, der in einer Menge von 5 bis 90 Gew.-%, bezogen auf die Formmasse, eingesetzt wird. Bei diesem Polyester handelt es sich um ein marktübliches Produkt der Fa. Eastman Chemical Co., Tennessee, USA, wie es in dem europäischen Patent EP 1 066 339 B1 beschrieben ist. Dieser Polyester ist an Stelle des üblichen Copolymeren aus Vinylchlorid und Vinylacetat Bestandteil der erfindungsgemäßen Formmasse. Als Antiblockmittel wird üblicher Weise noch Kaolin oder Kreide in einer Menge von 0,1 bis 0,5 Gew.-%, insbesondere von 0,2 Gew,.%, bezogen auf die Menge der Formmasse, zugesetzt.

Die Formmasse kann selbstverständlich auch mit Hilfe entsprechender Farbmittel bzw. -stoffe eingefärbt werden, wobei die Einfärbung auf weiß vorzugsweise mit Titandioxid und/oder Kreide vorgenommen wird. Als Flammschutzmittel kann noch Antimontrioxid und als bevorzugtes Antistatikmittel quaternäres Ammoniumsalz zugesetzt werden. Ebenso können übliche Weichmacher und sonstige Verarbeitungshilfsmittel zugegeben werden. Die Aufbereitung der Formmasse, von der bei der Herstellung der erfindungsgemäßen Folien ausgegangen wird, erfolgt durch Mischen eines pulver-, pellet- oder granulatförmigen Vinylchloridpolymerisats oder Polyvinylchlorids mit 5 bis 94 Gew.-% und einem K-Wert von 50 bis 90 mit Additiven, deren Anteil 2 bis 25 Gew.-%, jeweils bezogen auf das Gesamtgewicht der Formmasse, beträgt, durch Hinzufügen eines halbkristallinen oder amorphen Polyesters in Pulver-, Pellet- oder Granulatform, mit einem Anteil von 5 bis 90 Gew.-% der Formmasse. Die Formmasse wird plastifiziert, aufgeschmolzen und beim Kalandrieren zu einer Folie oder Folienbahn, die durch Hindurchführen durch einen Druckspalt zweier Kalandrierwalzen eines Walzenkalanders, bei Temperaturen von 150 bis 250 °C der Kalandrierwalzen ausgewalzt. Dabei wird das für Vinylchloridpolymerisat bekannte Rollknet-Kalandrierverfahren angewandt. Vor den Walzen des 4-bis 6-Walzenkalanders, der im Allgemeinen hochglatte, hartverchromte Walzen umfasst, bildet sich vor jedem Walzenspalt ein rotierender Knetkörper aus, der als Rollknet bezeichnet wird. Die kalandrierte Folie wird von der letzten Kalanderwalze abgezogen und mittels Kühlwalzen gekühlt und aufgewickelt. Nachfolgend kann in einem inline und/oder offline Verfahrensschritt noch z. B. ein Streckprozess in Längs- und/oder Querrichtung mit einem Streckgrad von 3 bis 7 erfolgen. Die Folie wird dabei dünner und erhält ein Schrumpfvermögen (hohe Maßände-rungswerte in Streckrichtung).

Die Folie hat im Allgemeinen eine Dicke von 100 µm bis 1 mm und wird bei Bedarf mit einem Streckgrad von 3 bis 7 auf Dickenwerte von z. B. 20 bis 250 µm Dicke gestreckt. Der Streckgrad ist der Quotient aus der Foliendicke vor dem Verstrecken und Foliendicke nach dem Streckvorgang und beträgt bevorzugt 3 bis 4. Somit werden Folien in einer Dicke von 20 bis 250 µm und bevorzugt von 35 bis 200 µm Dicke erhalten.

An den Folien wurden folgende Eigenschaften gemessen.
1. Die Dicke wurde in Anlehnung an DIN 53370 mittels eines Tastgeräts der Firma Mitutoyo, Japan, Typ 543/250 B bestimmt. Bei den Punktmessungen wurde die Folie zwischen den geöffneten Messflächen des Tastgerätes eingelegt, die dann anschließend stoßfrei geschlossen wurden. Die Dicke wurde von dem Tastgerät abgelesen.
2. Die Trübung bezeichnet den prozentualen Anteil des Streulichtes in Vorwärtsrichtung vom gesamten durch die Folie hindurchtretenden Lichtstromes. Die Messung der Trübung geschieht mit einer firmeneigenen Messgerätentwicklung, die eine Geometrie ähnlich der Geometrie des Messgerätes gemäß der ASTMD 1003-61-Norm aufweist.
3. Die Messung der Pasteurisierbarkeit erfolgt nach einer werksinternen Vorschrift. Dazu wird die Folie um einen Glaszylinder mit Tetrahydrofuran verschweißt und im Wasserbad bei der angegebenen Pasteurisiertemperatur gelagert. Nach den Wasserlagerung wird die Folie vom Glaszylinder entfernt und die Trübung bestimmt.
4. Kantenradius. Diese Messung geschieht nach einer werksinternen Vorschrift. Die Folie wird durch Negativformung in einem Formteil im Vakuum bei drei verschiedenen, in Stufen von 20 °C steigenden Temperaturen zu kleinen, runden Bechern geformt. Der Radius zwischen der Becherwand und dem Becherboden wird optisch gemessen. Dieser Radius ist zunächst groß und wird mit zunehmender Fließfähigkeit der Folie beim Thermoformvorgang kleiner, d. h. er nähert sich stärker dem Übergangsradius zwischen Wand und Boden des Formteils an. Es wird hier nur der Kantenradius bei der Temperatur von 100 °C angegeben.
5. Schlagzugzähigkeit: Die Messung erfolgt nach DIN EN ISO 8256 in Längs- und Querrichtung mittels eines Pendelschlagwerks. Hierbei wird die Folie durch einen einzigen Pendelschlag bis zum Bruch verstreckt. Die dabei verbrauchte Energie wird aus dem Energieverlust des Pendels bestimmt, wobei eine Korrektur für die Schleppzeigerreibung und die Schleuderarbeit vorgenommen wird.
6. E-Modul-Messung: Der E-Modul wird nach DIN EN ISO 527 in Längs- und Querrichtung bestimmt. Hierzu wird ein zwischen zwei Klemmen eingespannter Folienstreifen mit einer Breite von 15 mm, einer Länge von 170 mm und einer Einspannlänge von 100 mm unter vorgegebener konstanter Vorschubgeschwindigkeit von 10 mm/min und vorgegebenen Prüfbedingungen wie beispielsweise Normklima gedehnt. Aus dem aufgenommen Diagramm Zugkraft-/Längenänderung wird der Elastizitätsmodul als Anstieg der Kurve ermittelt.
7. Maßänderung in Querrichtung. Diese Messung wird nach DIN 53377 durchgeführt. Hierzu wird die Folie bei vorgegebener Temperatur von 75 °C und 95 °C im Wasserbad für 30 s gelagert. Die nach dieser Zeit eingetretene Maßänderung wird bei Raumtemperatur gemessen.
8. Schrumpfbeginn: Es wird die Temperatur - gerundet auf 5 °C-Schritte - angegeben, bei der die Folie eine Maßänderung quer kleiner -1 % und eine Maßänderung größer als -5 % aufweist.
9. Stippen: Dieser Wert wird mittels eines Kamerainspektionssystems der Fa. Optical Controlsystem, Deutschland, Typ FSP 600 erfasst, das optisch wirksame Fehler, z. B. Stippen, thermisch abgebautes Material, Bläschen, und dergleichen während des Kalandrierens der Folie im Transmissionsverfahren detektiert. Es werden Fehlergrößen im Bereich von 500 bis 2000 µm erfasst und die Anzahl der Fehler pro 10 m² Folienfläche angegeben.
10. Thermostabilität: Eine zu untersuchende Mischung aus PVC, Additiven und anderen Polymeren wird am 2-Walzenstuhl mit definierten Parametern wie einer Walzenoberflächentemperatur von 185 °C, einer Knettemperatur von 180 °C, einer Walzengeschwindigkeit von Walze 1: 6,7 m/min und Walze 2: 6,9 m/min und einer Foliendicke von 400 µm ausgewalzt. Es wird in Abhängigkeit von der Zeit der Grad der Vergilbung, d. h. der thermische Abbau visuell beurteilt und qualitativ mit den Noten 1 bis 6 (Schulnotensystem) klassifiziert, wobei die Note 1 einen geringen Abbau und die Note 6 einen starken Abbau anzeigen. Zur Dokumentation können in kurzen Zeitabständen auch kleine Proben genommen und auf eine feste Unterlage aufgereiht werden.
11. Farbneutralität: Die Folien werden farbmetrisch nach DIN 6174 mit Glanz vermessen. Dazu werden die Folien in fünf Lagen auf einer Weißkachel aufgelegt.
12. Suntest: Bei dieser Messung werden Folien mit einer Fläche von ungefähr 480 cm² in einen Probenraum eingelegt und in einem Wellenlängenbereich von 270 bis 1100 nm mit einer Strahlerleistung von 585 W /m² belichtet. Nach jeweils 24 Stunden erfolgt eine Farbmessung der einlagigen Folie mit Glanz nach DIN 6174 und danach wird ein Vergleich mit einen unbelichteten Folienmuster vorgenommen. Es wird die Zeit festgestellt, nach der eine Farbabweichung von dE = 5,0 eintritt.

In Tabelle 1 sind die Rezepturen, die Rohstoffe und ihre Lieferanten und die chemischen Bezeichnungen der Rohstoffe und in Tabelle 2 die Eigenschaften und die Maßeinheiten für die Foliendicken von 200 µm und 50 µm für die Vergleichsbeispiele 1 bis 3 und 7 und die erfindungsgemäßen Beispiele 4, 5 und 6 zusammengestellt.

Dabei zeigt sich, dass die Trübung der erfindungsgemäßen Folien nach den Beispielen 4 und 5 kleiner als die der Folien der Vergleichsbeispiele 1 und 3 ist. Die Trübung einer verstreckten Folie mit einer Dicke von 50 µm beträgt 2 bis 5 %. Die Pasteurisierung mit den erfindungsgemäßen Folien kann bei einer Temperatur von größer 50 °C bis zu 90 °C erfolgen, während sie bei den Folien der Vergleichsbeispiele niedriger als 50 °C ist. Mit steigendem Polyesteranteil in den erfindungsgemäßen Folien nähert sich die Temperatur für die Pasteurisierung der Temperatur von 85 °C für die Pasteurisierung der Folie des Vergleichsbeispiels 7 an.

Der Kantenradius der erfindungsgemäßen Folien mit einer Dicke von 200 µm der Beispiele 4 und 5 ist niedriger als derjenige der Folie nach dem Beispiel 1, was für eine bessere thermische Verformbarkeit der erfindungsgemäßen Folien spricht. Der Kantenradius beträgt bei einer Temperatur von 100 °C 1,2 bis 2,0 mm, insbesondere 1,4 bis 1,8 mm.

Die Schlagzugzähigkeit in Längs-/Querrichtung ist deutlich größer bei den erfinderischen Folien als bei den Folien der Vergleichsbeispiele 1 bis 3 und 7.

Der E-Modul in Längs-/Querrichtung ist bei den erfindungsgemäßen Folien geringer als bei den Folien der Vergleichsbeispiele 1 bis 3 und etwa gleich groß wie der E-Modul der reinen PET-Folie des Beispiels 7. Das E-Modul längs/quer der erfindungsgemäßen Folien beträgt 1400 bis 3500 N/mm² /1400 bis 3500 N/mm², bei einer Foliendicke im Bereich von 50 bis 200 µm.

Die Maßänderungen in Querrichtung bei 95 °C der erfinderischen Folien sind bis zu 10 % größer als die der Vergleichsfolien, während bei der Temperatur von 75 °C die Maßänderungen der erfindungsgemäßen Folie und der Vergleichsfolien etwa gleich groß sind. Da jedoch bei den PET-freien Folien der maximale Streckgrad und damit die maximal erreichbare Maßänderung begrenzt ist und zu maximal 66 % Maßänderung führt (Beispiel 3), gelingt es bei den PEThaltigen Rezepturen den Streckgrad ohne Abriss zu erhöhen und so Werte um 72 % (Beispiel 6) zu erreichen - eine wesentliche Verbesserung bei dieser Eigenschaft. Die Maßänderung der erfindungsgemäßen Folien durch Schrumpfen in Querrichtung liegt bei 20 bis 70 % bei einer Temperatur von 75 °C und bei 45 bis 80 % bei einer Temperatur von 95 °C.

Der Schrumpfbeginn aller Folien erfolgt in etwa bei der gleichen Temperatur von 60 °C. Die Anzahl der optischen Fehler ist bei den erfindungsgemäßen Folien um den Faktor 3 kleiner als bei den Folien der Vergleichsbeispiele 1 bis 3 und beträgt pro 10 m² bis zu 10, d. h. die Anzahl ist kleiner/gleich 10.

Für die Farbneutralität gilt, dass die Werte ΔL*/Δa*/Δb* der erfindungsgemäßen Folien gegenüber den gleichen Werten der Folie des Vergleichsbeispiels 1, wobei diese Folie als Standard verwendet wurde, nur geringfügig abweichen. Die Farbwerte der Standardfolie sind: L* = 91,77, a* = -0,12 und b* = 3,38. In der Tabelle 2a sind die Abweichungen ΔL*/Δa*/Δb* von den Farbwerten der Standardfolie angegeben. Die Abweichungen bei den Beispielen zeigen, dass zwischen den Beispielen keine großen Unterschiede zu beobachten sind. Die Farbwerte der Folie liegen in den Bereichen L* = 91 bis 93, a* = -0,2 bis +0,2 und b* = 3 bis 4.

Der Suntest zeigt, dass bei den erfindungsgemäßen Folien eine Farbabweichung erst nach längerer Zeit als bei den Vergleichsbeispielen 1 und 3 eintritt. So beträgt die Zeit für den Eintritt einer Farbabweichung 8,8 h bzw. 14,5 h bei den erfindungsgemäßen Folien der Beispiele 4 und 6, während bei den Vergleichsbeispielen 1 und 3 nach 6,6 h bzw. 4,2 h eine Farbabweichung auftritt.

**Tabelle 1a**

| Rezeptur | Rohstoffbeispiel (Lieferant) | Chemische Bezeichnung | PVC-Folien | | |
|---|---|---|---|---|---|
| | | | Vergleichs-beispiel 1 | Vergleichsbeispiel 2 | Vergleichs-beispiel 3 |
| M/S PVC | VINNOLIT S 3160 (Vinnolit) | Polyvinylchlorid (hergestellt nach dem Masse- oder Suspensionsverfahren mit einem K-Wert von 60 | 86 | 56 | 16 |
| Modifier | KANE ACE B 580 (Kaneka) | Methylmethacrylat-Butadien-Styrol-Copolymerisat | 10 | 10 | 10 |
| Verarbeitungshilfe | KANE ACE PA 101 (Kaneka) | Methylmethacrylat-Acrylat Ester-Styrol-Copolymerisat | 1 | 1 | 1 |
| Stabilisator | THERMOLITE 890F (Arkema) | Dioctylzinnbis-/Thioglykol-2-Ethyl-1-Hexylester): > 70 % Monooctylzinntris-/Thioglykolsäure-2-Ethyl-1-Hexylester): < 30 % | 1,5 | 1,5 | 1,5 |
| Wachs A | Ligalub 74 KE (Greven Fett Chemie) | Mischung von Komplex- und Glycerinestern | 1 | 1 | 1 |
| Wachs B | Pisterene 4900 (Unichema) | Gesättigte, unverzweigte aliphatische Monocarbonsäuren, hauptsächlich Palmitin- und Stearinsäure | 0,3 | 0,3 | 0,3 |
| Polyester | Tsunami (Eastman) | s. EP 1 066 339 B1 | 0 | 0 | 0 |
| VAC-Copo | VINNOLIT S 3157/11 (Vinnolit) | Copolymeres aus Vinylchlorid u. Vinylacetat (Gehalt Vinylacetat 11 %) | 0 | 30 | 70 |
| Antiblock | MICROCARB LB 10 T (Revertè) | Kreide | 0,2 | 0,2 | 0,2 |
| Streckparameter | Einheit | | | | |
| max. Streckgrad | ohne Einheit (Quotient aus Vorfoliendicke und Dicke nach dem Streckvorgang) | | 2,5 | 3,0 | 3,5 |
| Strecktemperatur (Folientemp.) | [°C] | | 100 | 100 | 105 |

**Tabelle 1b**

| Rezeptur | Rohstoffbeispiel (Lieferant) | Chemische Bezeichnung | PVC/PET/Blend | | | PET-Folie |
|---|---|---|---|---|---|---|
| | | | erfin.gem. Beispiel 4 | erfin.gem. Beispiel 5 | erfin.gem. Beispiel 6 | Vergl. Beispiel 7 |
| M/S PVC | VINNOLIT S 3160 (Vinnolit) | Polyvinylchlorid (hergestellt nach dem Masse- oder Suspensionsverfahren mit einem K-Wert von 60 | 71 | 61 | 51 | 0 |
| Modifier | KANE ACE B 580 (Kaneka) | Methylmethacrylat-Butadien-Styrol-Copolymerisat | 10 | 10 | 10 | 0 |
| Verarbei-tungshilfe | KANE ACE PA 101 (Kaneka) | Methylmethacrylat-Acrylat Ester-Styrol-Copolymerisat | 1 | 1 | 1 | 1 |
| Stabilisator | THERMOLITE 890F (Arkema) | Dioctylzinnbis-/Thioglykol-2-Ethyl-1-Hexylester): > 70 % Monooctylzinntris-/Thioglykolsäure-2-Ethyl-1-Hexylester): < 30 % | 1,5 | 1,5 | 1,5 | 0 |
| Wachs A | Ligalub 74 KE (Greven Fett Chemie) | Mischung von Komplex- und Glycerinestern | 1 | 1 | 1 | 1 |
| Wachs B | Pisterene 4900 (Unichema) | Gesättigte, unverzweigte aliphatische Monocarbonsäuren, hauptsächlich Palmitin- und Stearinsäure | 0,3 | 0,3 | 0,3 | 0,3 |
| Polyester | Tsunami (Eastman) | s. EP 1 066 339 B1 | 15 | 25 | 35 | 97,5 |
| VAC-Copo | VINNOLIT S 3157/11 (Vinnolit) | Copolymeres aus Vinylchlorid u. Vinylacetat (Gehalt Vinylacetat 11 %) | 0 | 0 | 0 | 0 |
| Antiblock | MICROCARB LB 10 T (Revertè) | Kreide | 0,2 | 0,2 | 0,2 | 0,2 |
| Streckparameter | Einheit | | | | | |
| max. Streckgrad | ohne Einheit (Quotient aus Vorfoliendicke und Dicke nach dem Streckvorgang) | | 3,0 | 3,5 | 4,0 | 5,0 |
| Strecktemperatur (Folientemp.) | [°C] | | 100 | 100 | 100 | 90 |

**Tabelle 2a**

| Folieneigenschaften | Einheit | PVC-Folien | | | | | |
|---|---|---|---|---|---|---|---|
| | | Vergleichsbeispiel 1 | | Vergleichsbeispiel 2 | | Vergleichsbeispiel 3 | |
| Dicke | µm | 200 | 50 | 200 | 50 | 200 | 30 |
| Trübung | % | 12 | 5 | / | / | 13 | 8 |
| Pasteurisierbarkeit | °C | <50 | <50 | <50 | < 50 | < 50 | < 50 |
| Kantenradius bei 100 °C | mm | 3,0 | / | / | / | / | / |
| Schlagzugzähigkeit | kJ/m² | 250/300 | / | / | / | 250/320 | 280/550 |
| (längs/quer) | | | | | | | |
| E-Modul (längs/quer) | N/mm² | 2010/1920 | 2000/3400 | / | / | / | 2300/3500 |
| Maßänderung quer bei 95°C | % | / | -50 | / | -60 | / | -66 |
| Maßänderung quer bei 75°C | % | / | -8 | / | -50 | / | -55 |
| Schrumpfbeginn | °C | / | 65 | / | 60 | / | 55 |
| Stippen | /10 m² | ∼40 | / | -30 | / | -30 | / |
| Thermostabilität | Schulnoten | 2 | / | / | / | 4 | / |
| (nach 25 min Wartezeit) | | | | | | | |
| Farbneutralität | ΔL/Δa/Δb | / | Standard | / | / | / | 0,74/0,14/0,27 |
| (Standard =Beispiel 1) | | | L* = 91,77 | | | | |
| | | | a* = -0,12 | | | | |
| | | | b* = 3,38 | | | | |
| Suntest (bis dE 5 erreicht) | Stunden | 6,6 | / | / | / | 4,2 | / |

**Tabelle 2b**

| Folieneigenschaften | Einheit | PVC/PET-Blend | | | | | | PET-Folie | |
|---|---|---|---|---|---|---|---|---|---|
| | | erfind.gem. Beispiel 4 | | erfind.gem. Beispiel 5 | | erfind.gem.Beispiel 6 | | Beispiel 7 | |
| Dicke | µm | 200 | 50 | 200 | 50 | 200 | 50 | 200 | 50 |
| Trübung | % | 9 | 3 | 10 | 4 | 16 | 5 | / | |
| Pasteurisierbarkeit | °C | 75 | 75 | 75 | 75 | 80 | 80 | 85 | 85 |
| Kantenradius bei 100 °C | mm | 1,8 | / | 1,6 | / | 1,4 | / | / | / |
| Schlagzugzähigkeit (längs/quer) | kJ/m² | 330/420 | 180/580 | 330/360 | 230/690 | 230/330 | 150/980 | 280/310 | 170/1600 |
| E-Modul (längs/quer) | N/mm² | 1590/1400 | 1600/2650 | 1660/1430 | 1870/3000 | 1890/1480 | 1490/1420 | 1640/1350 | 1500/1300 |
| Maßänderung quer bei 95°C | % | / | -60 | / | -66 | / | -72 | / | -75 |
| Maßänderung quer bei 75°C | % | / | -37 | / | -47 | / | -56 | / | -65 |
| Schrumpfbeginn | °C | / | 60 | / | 60 | / | 60 | / | 60 |
| Stippen | /10 m² | ∼10 | / | -10 | / | ∼10 | / | -5 | / |
| Thermostabilität (nach 25 min Wartezeit) | Schulnoten | 2 | / | / | / | 2 | / | 1 | / |
| Farbneutralität (Standard = Beispiel 1) | ΔL/Δa/Δb | / | -0,62/0,18/0,34 | / | -0,04/-0,04/0,36 | / | / | / | / |
| Suntest (bis dE 5 erreicht) | Stunden | 8,8 | / | / | / | 14,5 | / | / | / |

## Patentansprüche

1. Verfahren zur Herstellung einer Folie oder einer Folienbahn aus einer Mischung aus Vinylchloridpolymerisat oder Polyvinylchlorid, Polyester und Additiven umfassend die Schritte
(a) Auswählen eines pulver-, pellet- oder granulatförmigen Vinylchloridpolymerisats oder Polyvinylchlorids mit einem K-Wert von 50 bis 90 und einem Anteil von ≥ 5 Gew.-% an der Mischung und Mischen mit Additiven aus der Gruppe Modifizierungsmittel bestehend aus hochmolekularen Polymeren, Stabilisatoren, Wachsen, Antiblockmitteln, Farbmitteln, Weichmachern, Verarbeitungshilfsmitteln, mit einem Anteil von 2 bis 25 Gew.-% an der Mischung;
(b) Auswählen eines amorphen oder halbkristallinen Polyesters in Pulver-, Pellet- oder Granulatform mit einer Kristallisationshalbwertzeit im geschmolzenen Zustand von mindestens 5 min, mit einem Anteil von 5 bis 90 Gew.-% an der Mischung;
(c) Plastifizieren und Aufschmelzen der Mischung gemäß den Schritten (a) und (b);
(d) Kalandrieren der aufgeschmolzenen Mischung durch Einführen in den Druckspalt zweier Kalandrierwalzen eines Walzenkalanders, bei Temperaturen von 150 bis 250 °C, um eine Folie oder eine Folienbahn zu formen;
(e) Verstrecken der Folie oder Folienbahn in einem inline und/oder offline Prozess mit einem Streckgrad von 3 bis 7 in Längs- und/oder Querrichtung.

2. Verfahren nach Anspruch 1, **dadurch gekennzeichnet, dass** die mittlere Strecktemperatur bzw. Folientemperatur beim Verstrecken 70 bis 120 °C, insbesondere 100 °C beträgt.

3. Verfahren nach Anspruch 1, **dadurch gekennzeichnet, dass** die Mischung in einem Kneter, auf einem Mischwalzwerk oder in einem Extruder auf etwa 130 bis 190 °C vorgeliert wird, um anschließend durch Kalandrieren auf einem 3- bis 6-Walzenkalander zu der Folie oder der Folienbahn geformt zu werden.

4. Verfahren nach Anspruchl, **dadurch gekennzeichnet, dass** das Vinylchloridpolymerisat aus einem pulverförmigen Vinylchloridpolymerisat mit einem K-Wert von 50 bis 65 und einem Anteil von 55 bis 70 Gew.-% der Mischung und einem pulverförmigen Vinylchloridpolymerisat mit einem K-Wert von 70 bis 90 und einem Anteil von 15 bis 25 Gew.-% der Mischung besteht, die miteinander gemischt werden, dass halbkristalliner oder amorpher Polyester in Pulver-, Pellet- oder Granulatform und einem Anteil von ≥ 10 Gew.-% der Mischung und Additive mit einem Anteil von ≥ 5 Gew.-% der Mischung hinzugefügt werden, die so erhaltene Mischung plastifiziert und aufgeschmolzen wird und dass die aufgeschmolzene Mischung zu einer Folie kalandriert wird.

5. Verfahren nach Anspruch 1, **dadurch gekennzeichnet, dass** die Oberfläche der Folie durch Rollknet-Kalandrierung matt und rauh wird.

6. Verfahren nach Anspruch 1, **dadurch gekennzeichnet, dass** die Oberfläche der Folie mit Hilfe von glatt geschliffenen Kalanderwalzen geglättet und hochglänzend wird.

7. Folie, hergestellt nach dem Verfahren gemäß den Ansprüchen 1 bis 3, 5 und 6, wobei die aus der Mischung kalandrierte unverstreckte Folie eine Dicke von 100 µm bis 1 mm aufweist und inline und/oder offline mit einem Streckgrad von 3 bis 7 zu einer Folie mit einer Dicke von 20 µm bis 800 µm verstreckt ist.

8. Folie nach Anspruch 7, **dadurch gekennzeichnet, dass** der Streckgrad zwischen 3 und 4 liegt.

9. Folie nach Anspruch 7, **dadurch gekennzeichnet, dass** die Foliendicke 35 bis 200 µm beträgt.

10. Folie nach Anspruch 7, **dadurch gekennzeichnet, dass** die Trübung der verstreckten Folie mit einer Dicke von 50 µm 2 bis 5 % beträgt, wobei mit zunehmender Foliendicke die Trübung ansteigt.

11. Folie nach Anspruch 7, **dadurch gekennzeichnet, dass** die Pasteurisierungstemperatur größer 50°C und bis zu 90 °C beträgt.

12. Folie nach Anspruch 7, **dadurch gekennzeichnet, dass** der Kantenradius der Folie bei einer Temperatur von 100 °C 1,2 bis 2,0 mm beträgt.

13. Folie nach Anspruch 12, **dadurch gekennzeichnet, dass** der Kantenradius der Folie bei einer Temperatur von 100 °C 1,4 bis 1,8 mm beträgt.

14. Folie nach Anspruch 7, **dadurch gekennzeichnet, dass** die Maßänderung der Folie durch Schrumpfen in Querrichtung bei einer Temperatur von 75 °C im Bereich von 20 bis 70 % liegt.

15. Folie nach Anspruch 7, **dadurch gekennzeichnet, dass** die Maßänderung der Folie durch Schrumpfen in Querrichtung bei einer Temperatur von 95°C im Bereich von 45 bis 80 % liegt.

16. Folie nach Anspruch 7, **dadurch gekennzeichnet, dass** die Farbwerte der Folie in den Bereichen L* = 91 bis 93, a* = -0,2 bis +0,2 und b* = 3 bis 4 liegen.

17. Folie nach Anspruch 7, **dadurch gekennzeichnet, dass** der E-Modul längs/quer 1400 bis 3500 N/mm² / 1400 bis 3500 N/mm² bei einer Foliendicke im Bereich von 50 bis 200 µm beträgt.

18. Verwendung der Folie gemäß einem der Ansprüche 7 bis 17, als thermoformbare und/- oder schrumpfbare Folie.

19. Verwendung der Folie gemäß einem der Ansprüche 7 bis 17 als Verpackungs-, Schrumpf-, Möbel-, Wandbelags-, beschreibbare und bedruckbare Folie.

## Claims

1. A process for the production of a film or of a film web made of a mixture of vinyl chloride polymer or polyvinyl chloride, polyester, and additives, comprising the following steps:
(a) selection of a pulverulent, pelletized, or granular vinyl chloride polymer or polyvinyl chloride with a K value of from 50 to 90, the proportion thereof being greater than or equal to 5 % by weight, based on the mixture, and mixing with additives from the group of high-molecular-weight polymeric modifiers, stabilizers, waxes, antiblocking agents, colorants, plasticizers, processing aids, the proportion thereof being from 2 to 25 % by weight, based on the mixture;
(b) selection of an amorphous or semicrystalline polyester in pulverulent, pelletized, or granular form with a crystallization halflife time in the molten state of at least 5 min., the proportion thereof being from 5 to 90 % by weight, based on the mixture;
(c) plastification and melting of the mixture from steps (a) and (b);
(d) calendering of the molten mixture via introduction into the nip between two calender rolls of a roll calender, at temperatures of from 150 to 250 °C, in order to form a film or a film web;
(e) orientation of the film or film web in an inline and/or offline process with a degree of stretching of from 3 to 7 in longitudinal and/or transverse direction.

2. The process as claimed in claim 1, wherein the average stretching temperature or film temperature during the orientation process is from 70 to 120 °C, in particular 100 °C.

3. The process as claimed in claim 1, wherein the mixture is pregelled in a kneader, on mixing rolls, or in an extruder at about 130 to 190 °C, so that it can then be molded via calendering in a 3- to 6-roll calender to give the film or the film web.

4. The process as claimed in claim 1, wherein the vinyl chloride polymer is composed of a pulverulent vinyl chloride polymer with a K value of from 50 to 65, the proportion thereof being from 55 to 70 % by weight of the mixture, and of a pulverulent vinyl chloride polymer with a K value of from 70 to 90, the proportion thereof being from 15 to 25 % by weight of the mixture, these being mixed with one another, wherein semicrystalline or amorphous polyester in pulverulent, pelletized, or granular form, the proportion thereof being greater than or equal to 10 % by weight of the mixture, and additives, the proportion thereof being greater than or equal to 5 % by weight of the mixture, are added, the resultant mixture is plastified and melted, and the molten mixture is calendered to give a film.

5. The process as claimed in claim 1, wherein the surface of the film becomes matt and rough as a result of rolling-bank calendering.

6. The process as claimed in claim 1, wherein polished calender rolls are used to give the film a smooth and high-gloss surface.

7. A film produced by the process as claimed in claims 1 to 3, 5 and 6, where the thickness of the unoriented film calendered from the mixture is from 100 µm to 1 mm, and said film has been oriented inline and/or offline with a degree of stretching of from 3 to 7 to give a film of thickness from 20 µm to 800 µm.

8. The film as claimed in claim 7, wherein the degree of stretching is from 3 to 4.

9. The film as claimed in claim 7, wherein the thickness of the film is from 35 to 200 µm.

10. The film as claimed in claim 7, wherein the haze of the oriented film of thickness 50 µm is from 2 to 5 %, where haze rises with increasing film thickness.

11. The film as claimed in claim 7, wherein the pasteurization temperature is above 50 °C and up to 90 °C.

12. The film as claimed in claim 7, wherein the edge radius of the film at a temperature of 100 °C is from 1.2 to 2.0 mm.

13. The film as claimed in claim 12, wherein the edge radius of the film at a temperature of 100 °C is from 1.4 to 1.8 mm.

14. The film as claimed in claim 7, wherein the dimensional change of the film due to shrinkage in transverse direction at a temperature of 75 °C is in the range from 20 to 70 %.

15. The film as claimed in claim 7, wherein the dimensional change of the film due to shrinkage in transverse direction at a temperature of 95 °C is in the range from 45 to 80 %.

16. The film as claimed in claim 7, wherein the color coordinates of the film are within the ranges L* = from 91 to 93, a* = from -0.2 to +0.2, and b* = from 3 to 4.

17. The film as claimed in claim 7, wherein the longitudinal/transverse modulus of elasticity is from 1400 to 3500 N/mm²/ from 1400 to 3500 N/mm² for a film thickness in the range from 50 to 200 µm.

18. The use of the film as claimed in any of claims 7 to 17 as thermoformable and/or shrinkable film.

19. The use of the film as claimed in any of claims 7 to 17 as packaging film, shrink film, furniture film, wallcovering film, inscribable film, and printable film.

## Revendications

1. Procédé de production d'un film ou d'une bande de film à partir d'un mélange de polymérisat de chlorure de vinyle ou de polychlorure de vinyle, de polyester et d'additifs comprenant les étapes :
(a) sélectionner un polymérisat de chlorure de vinyle ou un polychlorure de vinyle sous forme de poudre, de pellets ou de granulés, ayant une valeur K de 50 à 90 et dans une proportion de 5 % en poids du mélange et mélanger avec des additifs du groupe des agents de modification consistant en polymères à haut poids moléculaire, stabilisateurs, cires, agents antibloquants, colorants, plastifiants, adjuvants de traitement, dans une proportion de 2 à 25 % en poids du mélange ;
(b) sélectionner un polyester amorphe ou semi-cristallin sous forme de poudre, de pellets ou de granulés, ayant une demi-vie de cristallisation à l'état fondu d'au moins 5 min, dans une proportion de 5 à 90 % en poids du mélange,
(c) plastifier et fondre le mélange selon les étapes (a) et (b) ;
(d) calandrer le mélange fondu en l'introduisant dans la fente de pression de deux rouleaux de calandrage d'une calandre, à des températures de 150 à 250 °C, pour former un film ou une bande de film ;
(e) étirer le film ou la bande de film dans un processus en ligne et/ou hors ligne à un taux d'étirage de 3 à 7 dans la direction longitudinale et/ou transversale.

2. Procédé selon la revendication 1, **caractérisé en ce que** la température d'étirage moyenne ou la température du film lors de l'étirage est de 70 à 120 °C, en particulier de 100 °C.

3. Procédé selon la revendication 1, **caractérisé en ce que** le mélange est prégélifié dans un malaxeur, sur un moulin mélangeur ou dans une extrudeuse à environ 130 à 190 °C pour être ensuite façonné en film ou en bande de film par calandrage sur une calandre à 3 à 6 rouleaux.

4. Procédé selon la revendication 1, **caractérisé en ce que** le polymérisat de chlorure de vinyle est constitué d'un polymérisat de chlorure de vinyle en poudre ayant une valeur K de 50 à 65 et dans une proportion de 55 à 70 % en poids du mélange et d'un polymérisat de chlorure de vinyle en poudre ayant une valeur K de 70 à 90 et dans une proportion de 15 à 25 % en poids du mélange qui sont mélangés ensemble, **en ce que** du polyester semi-cristallin ou amorphe sous forme de poudre, de pellets ou de granulés et dans une proportion de 10 % en poids du mélange et des additifs dans une proportion de 5 % en poids du mélange sont ajoutés, le mélange ainsi obtenu est plastifié et fondu et **en ce que** le mélange fondu est calandré en un film.

5. Procédé selon la revendication 1, **caractérisé en ce que** la surface du film est rendue mate et rugueuse par calandrage et malaxage par rouleaux.

6. Procédé selon la revendication 1, **caractérisé en ce que** la surface du film est lissée et rendue très brillante à l'aide de rouleaux de calandre polis à la meule.

7. Film produit suivant le procédé selon les revendications 1 à 3, 5 et 6, le film non étiré calandré produit à partir du mélange présentant une épaisseur de 100 µm à 1 mm et étant étiré en ligne et/ou hors ligne à un taux d'étirage de 3 à 7 en un film ayant une épaisseur de 20 µm à 800 µm.

8. Film selon la revendication 7, **caractérisé en ce que** le taux d'étirage est compris entre 3 et 4.

9. Film selon la revendication 7, **caractérisé en ce que** l'épaisseur du film est de 35 à 200 µm.

10. Film selon la revendication 7, **caractérisé en ce que** la turbidité du film étiré ayant une épaisseur de 50 µm est de 2 à 5 %, la turbidité augmentant avec l'épaisseur croissante du film.

11. Film selon la revendication 7, **caractérisé en ce que** la température de pasteurisation est supérieure à 50 °C et va jusqu'à 90 °C.

12. Film selon la revendication 7, **caractérisé en ce que** le rayon du bord du film est de 1,2 à 2,0 mm à une température de 100 °C.

13. Film selon la revendication 12, **caractérisé en ce que** le rayon du bord du film est de 1,4 à 1,8 mm à une température de 100 °C.

14. Film selon la revendication 7, **caractérisé en ce que** le changement de dimensions du film par contraction dans la direction transversale est de l'ordre de 20 à 70 % à une température de 75 °C.

15. Film selon la revendication 7, **caractérisé en ce que** le changement de dimensions du film par contraction dans la direction transversale est de l'ordre de 45 à 80 % à une température de 95 °C.

16. Film selon la revendication 7, **caractérisé en ce que** la valeur chromatique du film se situe dans les plages L* = 91 à 93, a* = -0,2 à +0,2 et b* = 3 à 4.

17. Film selon la revendication 7, **caractérisé en ce que** le module d'élasticité longitudinale / transversale est de 1400 à 3500 N/mm² / 1400 à 3500 N/mm² pour une épaisseur de film de l'ordre de 50 à 200 µm.

18. Utilisation du film selon l'une quelconque des revendications 7 à 17 comme film thermoformable et/ou rétractable.

19. Utilisation du film selon l'une quelconque des revendications 7 à 17 comme film d'emballage, film rétractable, film pour mobilier, film pour revêtement mural, film inscriptible et imprimable.
